# EUROPEAN PATENT SPECIFICATION

(11) **EP 3 081 799 B1**
(45) Date of publication and mention of the grant of the patent: **07.08.2019**
(21) Application number: 15163535.6
(22) Date of filing: 14.04.2015
(51) Int. Cl.: F02K 3/06, F02C 7/18, B64D 33/08

(54) **TURBO ENGINE WITH A FLUID DUCT SYSTEM**
TURBOMASCHINE MIT EINEM FLUIDLEITUNGSSYSTEM
TURBOMACHINE ÉQUIPÉE D'UN SYSTÈME DE CONDUIT DE FLUIDE

(43) Date of publication of application: 19.10.2016
(73) Proprietor: Rolls-Royce Deutschland Ltd & Co KG, 15827 Blankenfelde-Mahlow (DE)
(72) Inventor: Teia Dos Santos Mendes Gomes, Luis Daniel, 10115 Berlin (DE)
(74) Representative: Maikowski & Ninnemann Patentanwälte Partnerschaft mbB

(56) References cited:
- EP-A1- 2 851 300
- WO-A1-03/037715
- US-A- 4 351 150
- US-A1- 2009 314 004
- US-A1- 2010 074 736
- US-A1- 2012 000 179

## Description

The invention is related to a turbofan engine with a fluid duct system with the features of claim 1.

In certain areas of turbo engines (e.g. gas turbines or aircraft engines) temperatures can be high during operation. Usually, compartments within the turbo engines contain temperature sensitive targets e.g. electrical components which are sensitive to high temperatures.

The state of the art of thermal management and/or ventilation of such a compartment in a turbo engine, in particular a compartment in between the freestream zone and bypass duct of a turbofan engine, is the use of so called NACA inlets and outlets. This solution depends on the movement of the turbo engine relative to the fluid surrounding it. Therefore thermal management and/or ventilation is hard to achieve if the turbo engine has no relative motion to the surrounding fluid. In case of aircraft engines this can be called an engine-slaved system, or aircraft-driven system.

The operation of a turbo engine, in particular of an aircraft engine, in a motionless state compared to the surrounding fluid is a common mode of operation for a turbo engine. One of many examples would be a turbo engine of an aircraft during taxi, parking or take-off. Hence the thermal management and/or ventilation has especially great importance if the fluid surrounding the turbo engine is almost at a still stand relative to the turbo engine.

The turbo engine will heat up, jeopardizing the normal operation of temperature sensitive targets, e.g. electrical components in a compartment of the turbo engine, which in turn can lead, if no thermal management and/or ventilation is present, to failure or loss of the temperature sensitive target life/reliability.

Furthermore in such a motionless state with no active ventilation it is possible for flammable fluids, in particular flammable vapors to accumulate in certain areas, e.g. a compartment inside the turbo engine, increasing the risk of fire in a compartment.

Airworthiness authorities require for aircraft engines means of ventilation to minimize the probability of ignition of these fluids, in particular vapors and the resulting hazards if ignition does occur.

US 4 351 150 A shows an auxiliary air system contained within the nacelle of a gas turbine engine having the functions of cooling engine components and measuring air inlet temperature. The system comprises an air ducting pipe, temperature sensors extending into the pipe, a structure to be cooled, such as an electronics module, preferably with a heat transfer chamber, an air flow inducer, and, if desired, means for directing air onto other engine components.

WO 03/037715 A1 shows a passive cooling system for an auxiliary power unit installation on an aircraft. The system is for an auxiliary power unit having at least a compressor portion of a gas turbine engine and an oil cooler contained separately within a nacelle. The system includes the auxiliary power unit housed within the nacelle of the aircraft, an engine exhaust opening defined in the aft portion of the nacelle and communicating with the gas turbine engine, at least a first air inlet duct communicating with a second opening defined in said nacelle and with said compressor portion and the oil cooler is located within a second duct communicating with an opening other than the engine exhaust opening of said nacelle and with the engine exhaust opening. Exterior cooling air and engine exhaust ejected through said engine exhaust opening entrain cooling air through said second duct to said oil cooler, and thus provide engine oil cooling.

US 2010/074736 A1 shows a gas turbine engine having a heat exchanger at least partially disposed in a bypass duct. In one form the gas turbine engine is a high bypass ratio engine. The heat exchanger may be coupled with a directed energy weapon to provide coolant flow and regulate the temperature of the directed energy weapon.

US 2009/314004 A1 shows a turboprop engine which includes an engine nacelle and at least one bleed air line on the low-pressure compressor and at least one ejector formed by a cooling air duct and a nozzle to create a cooling air flow within the engine nacelle during critical ground idle operation (controlled or uncontrolled), and without undesirably increasing fuel consumption or disturbing the work cycle of the engine. The ejector is arranged within the engine nacelle in the forward part of the turboprop engine, with the cooling air duct appertaining to the ejector connecting at least one air intake disposed on the periphery of the engine nacelle with the interior of the engine nacelle, and with the at least one nozzle being arranged in the cooling air duct.

Therefore, an effective thermal management of a compartment within the turbo engine containing at least one temperature sensitive target and/or ventilation of the compartment for evacuation of flammable vapors out of the compartment by ventilation is necessary. The thermal management and/or ventilation should be independent of the relative motion of the engine and be coupled to the engine's operation.

The present invention provides a turbofan engine with the features of claim 1. Embodiments of the invention are identified in the dependent claims.

Accordingly the invention a turbofan engine comprises a compartment containing at least one temperature sensitive target within the turbofan engine and a fluid duct system for thermal management and/or ventilation in the compartment, said fluid duct system comprising a fluid duct device, said turbofan engine comprising a first spatial area at least partially lying in a bypass duct of the turbofan engine through which a fluid flows during operation of the turbofan engine, with the fluid duct device of the fluid duct system having at least two ends and at least one opening arranged within the compartment between the at least two ends, the fluid duct device connects the first spatial area of the bypass duct at the first end of the fluid duct device with a second spatial area at the second end of the fluid duct device, the second spatial area lying in a freestream zone of the turbofan engine and having a lower pressure than the first spatial area during operation of the turbo engine. Due to the pressure difference a pressure gradient is present in the fluid duct device and a flow of fluid from the first spatial are towards the second spatial area is generated resulting in a pressure gradient in the compartment and in a suction in order to suck a fluid surrounding the at least one opening into the fluid duct device through the at least one opening thereby generating a flow of fluid in the compartment for thermal management and or ventilation of the compartment.

The fluid flowing through the turbofan engine and surrounding it is air.

In one embodiment of the invention the fluid duct device has the same cross-section along its whole length. It can also comprise one or several, separately manufacturable fluid duct elements with e.g. ellipsoidal, polygonal or rectangular cross-sections.

The fluid duct elements might be connected rigidly or movable, depending on the embodiment.

In another embodiment the fluid duct elements are in fluid communication but not necessarily directly connected to each other. They might for example be divided into two parts.

Other embodiments may have a very flat design compared to the length of the fluid duct device and/or are wide compared to the length of the device. In some embodiments the shape of the fluid duct device might change along its length and e.g. may become wider or thinner.

In some alternative the fluid duct system can comprise at least one flow guiding element. The flow guiding element might be at least partially inside the fluid duct device. The at least one flow guiding device can have various forms and dimensions. In one possible form of the flow guiding device has a star-shaped cross-section. It can be comprised of several walls with a common center which leads to a star-shaped cross-section. The flow guiding device can shape the fluid flow to enhance e.g. the suction effect,

During operation of the turbofan engine a fluid in the first spatial area is under a higher pressure than the fluid in the second spatial area. In the turbofan engine the pressure of the fluid e.g. air in the bypass duct is higher than the fluid, e.g. also air in the freestream zone during operation of the turbofan engine.

Due to the pressure difference between the two spatial areas a pressure gradient is present in the fluid duct device resulting in a flow of fluid (e.g. air) from the first spatial area (e.g. bypass duct of a turbofan engine) towards the second spatial area (e.g. freestream zone of a turbofan engine). The flow of fluid results in a drop of static pressure compared to the static situation inside the fluid duct device according to Bernoulli's principle.

The fluid duct device comprises at least two ends. One end is connected to the first spatial area and the at least second end is connected to the second spatial area. In other embodiments the fluid duct device can comprise more than two ends but at least one end each is connected to the first and second spatial area. The preferred embodiment, in case of more than two ends, is that one or several ends are connected to the first and second spatial area each.

In one embodiment the compartment is arranged radial between the bypass duct and the freestream zone. The compartment lies inside of the turbofan engine, radially closer to the axis of the turbofan engine below the outer wall of the cowl.

The fluid duct device is configured to generate the suction at the at least one opening by a difference of static pressure. The flow of fluid generates the drop of static pressure inside the fluid duct device according to Bernoulli's principle and therefore suction at the at least one opening.

Through the at least one opening fluid surrounding the opening is sucked into the device and mixes with the fluid flowing through the device. The mix is then ejected into the second spatial area.

The fluid which gets sucked into the fluid duct device, e.g. out of the compartment, needs to be replaced by at least one source of fluid due to mass conservation. Therefore fluid starts to move in the area surrounding the at least one opening of the fluid duct device, e.g. the compartment, from the at least one source of the fluid towards the at least one opening of the fluid duct device.

This generates the ventilation and/or thermal management of the compartment. The temperature of the fluid coming from the at least one source of fluid, replacing the fluid sucked into the fluid duct device is usually not of the same temperature as the fluid flowing through the fluid duct device.

The fluid coming from the at least one source of fluid can e.g. be warmer or colder than the fluid flowing through the fluid duct device and therefore facilitate the thermal management of the compartment.

In the turbofan engine with the compartment radial between the bypass duct and freestream zone, the source of fluid can be one or several inlets placed anywhere on the wall of the cowl. An inlet connects the freestream zone with the compartment.

In such an embodiment the fluid flowing through the fluid duct device is hot air from the bypass duct. It can have temperatures around 100°C and even higher. The temperature of the fluid, also air, in the freestream zone is usually lower than this temperature. Therefore cooling of the compartment can be achieved by replacing the air sucked out of the compartment with cold air coming from the freestream zone.

Therefore thermal management and/or ventilation can depend on the location of the at least one source of fluid.

Thermal management can be cooling as well as heating.

If cooling of the compartment is the effect to be achieved and the temperature of the fluid flowing through the fluid duct device is hotter than the maximum wanted temperature in the compartment then the fluid duct device is configured in a way that almost no fluid enters the compartment from the fluid duct device. This can also be done vice versa.

The fluid duct device can therefore be configured in such a way that no significant amount of fluid from the first spatial area enters the compartment.

In certain embodiments it is optimal to have several openings in the fluid duct device. The at least one opening of the fluid duct device can be formed by a through hole in an outer wall of the fluid duct device.

Another embodiment can be that the fluid duct device with at least one opening comprises at least one flow guiding device at least partially inside the fluid duct device. It provides at least one contact surface, lying at least partially opposite of the at least one opening for the fluid sucked into the fluid duct device.

The flow guiding device has the function to accelerate the flow of fluid through the fluid duct device, and provide at least one contact surface for the accelerated flow of fluid with at least some of the fluid surrounding the fluid duct device. The shape of the flow guiding device is optimized to maximize the ratio of extracted flow of fluid from the compartment to the flow of fluid flowing through the fluid duct device (i.e. flow from bypass duct to freestream zone).

The flow guiding device does not have to be limited to the inside of the fluid duct device. It can be arranged partially or even completely outside of the fluid duct device. It might e.g. surround the opening in some form on the outside of the fluid duct device or it might be partially protrude through the opening from the inside to the outside of the fluid duct device.

In other embodiments the location of the flow guiding device is not connected to the location of the opening at all.

In another embodiment the fluid duct device comprises at least one fluid duct element and at least one flow guiding device, being in fluid communication with each other. The flow guiding device can comprise the at least one opening of the fluid duct device.

In an embodiment where the fluid duct device with opening in the compartment and at least one source of fluid are not arranged right next to each other a swirl effect is produced in the compartment. The fluid starts to swirl from the at least one source of fluid towards the opening of the fluid duct device and increases the ventilation effect of the whole construction.

The at least one compartment can comprise a coated section of the turbofan engine, a core casing, a bearing, a connector, a plastic part, an actuator for vanes in the turbofan engine, a movable part in the turbofan engine, a fuel line, an oil line, and / or a sealing of the turbofan engine. All these units require in particular a certain amount of cooling and/or heating and/or ventilation.

The at least one compartment can be rotational symmetric and surround a core of a turbofan engine completely.

Embodiments of the invention are described exemplary in the following figures.
- Fig. 1: shows a schematic cross-section of a turbo engine, in particular a turbofan engine with a first embodiment of a fluid duct system;
- Fig. 2A: shows a perspective view of a first embodiment of the fluid duct device;
- Fig. 2B: shows a close up perspective view of the first embodiment of the fluid duct device;
- Fig. 3: shows a perspective view of CFD simulation of an embodiment of the fluid duct device according to Fig. 2A in operation;
- Fig. 4: shows a perspective view of a second embodiment of the fluid duct device;
- Fig. 5: shows a perspective view of a third embodiment of the fluid duct device;
- Fig. 6: shows a perspective view of a fourth embodiment of the fluid duct device;
- Fig. 7: shows a perspective view of a fifth embodiment of the fluid duct device;
- Fig. 8: shows a perspective view of a sixth embodiment of the fluid duct device;
- Fig. 9A: shows a perspective view of a CFD simulation of a first embodiment of the fluid duct system with an embodiment of the fluid duct device according to Fig. 2A;
- Fig. 9B: shows a rotated version of the perspective view of a CFD simulation seen in Fig. 9A;
- Fig. 9C: shows a perspective view of a CFD simulation of a second embodiment of the fluid duct system with an embodiment of the fluid duct device according to Fig. 2A;
- Fig. 9D: shows a rotated version of the perspective view of a CFD simulation seen in Fig. 9C;

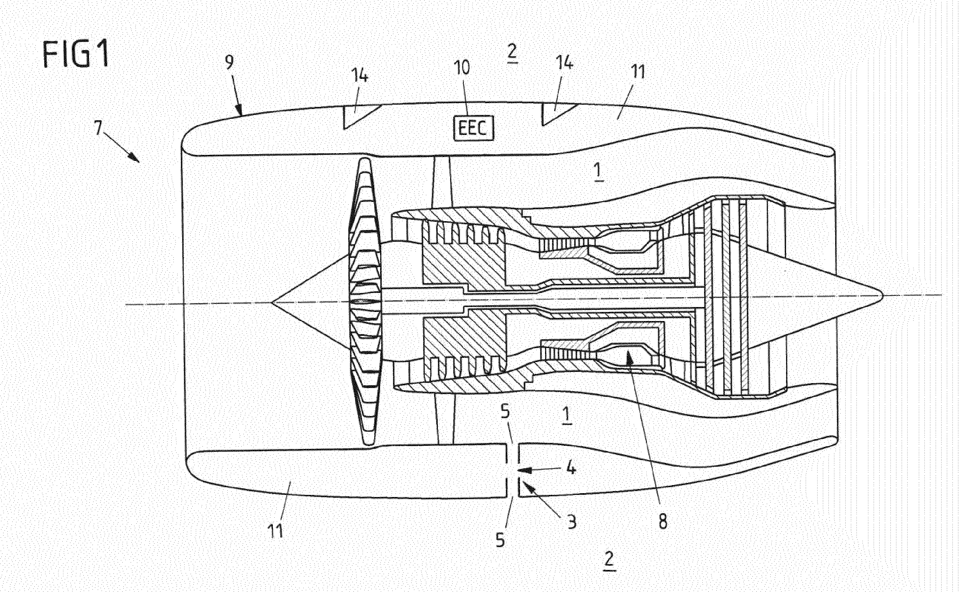

In Fig. 1 a turbofan engine 7 of an aircraft is shown as one example of a turbo engine 7. A fluid flows through the bypass duct 1, which is an example for a first spatial area 1, during operation of the turbofan engine 7. The fluid in this case is air. A fluid, again air, is surrounding the turbofan engine 7.

The second spatial area 2 outside of the turbofan engine 7 is the freestream zone 2.

Radial in between the freestream zone 2 and the bypass duct 1 lies a compartment 11 inside of the cowl 9. A fluid duct device 3 connects the freestream zone 2 with the bypass duct 1, in this example it is placed in the lower half of the turbofan engine 7. It has one opening 4 connecting the fluid duct device 3 with the compartment 11. The fluid sources 14 connect the freestream zone 2 with the compartment 11 and are placed in the upper half of the turbofan engine's cowl 9.

In the following the thermal management and/or ventilation is chiefly described in connection with the cooling and ventilation of the compartment 11 in the turbofan engine 7.

The free flowing air stream in the bypass duct 1 is generally not highly compressed and considerably cooler than many parts in or in the vicinity of a core 8 of the turbofan engine 7. The core 8 of the turbofan engine 7 comprises among other sections combustion chambers, a turbine and/or a compressor which can cause high temperatures in certain parts of the turbofan engine 7 during operation.

Even though the air in the bypass duct 1 is cooler than the core 8 of the turbofan engine 7 it is still considerably hotter than the air in the freestream zone 2 during operation.

In the schematic view of Fig. 1 it is assumed that the compartment 11 needs to be cooled as one task in the thermal management of the turbo engine 7. The compartment 11 could e.g. comprise a temperature sensitive target such as the Electronic Engine Controller (EEC) 10 which is sensitive to high temperatures. Other possible compartments 11 can comprise bearings, a core casing, a sealing, a connector, a plastic part, an actuator for vanes in the turbo engine 7, a movable part in the turbo engine 7, a fuel line, an oil line, and / or a sealing of the turbo engine 7 or coated parts of the turbo engine 7 which should not be subjected to high temperatures, at least for some period of time.

Another task might be the ventilation of the compartment 11. The accumulation of flammable vapors in the compartment 11 is possible and therefore ventilation is needed to evacuate the flammable vapors to prevent the risk of a fire.

During operation of the turbofan engine 7 the pressure in the bypass duct 1 is higher than the pressure in the freestream zone 2. The pressure difference depends on the operation of the turbofan engine 7. It generates a pressure gradient inside the fluid duct device 3, with the highest pressure at the radially inner end 5 of the fluid duct device 3 connected to the bypass duct 1 and the lowest pressure at the radially outer end 5 of the fluid duct device 3 connected to the freestream zone 2.

Due to the pressure difference a flow of air is generated from the bypass duct 1 through the fluid duct device 3 towards the freestream zone 2. This flow of air has a certain speed depending inter alia on the value of the pressure gradient. According to Bernoulli's principle a moving fluid, air in this case, leads to a drop of static pressure. Due to this drop of static pressure inside the fluid duct device 3 a static pressure difference is present at the at least one opening 4 between the inside of the fluid duct device 3 and the area surrounding the at least one opening 4.

The pressure difference creates suction at the at least one opening 4 and fluid (air) gets sucked into the fluid duct device 3 through the at least one opening 4. The air mixes with the air flowing through the fluid duct device 3 and gets ejected into the freestream zone 2.

Because of mass conservation the same amount of air that is sucked into the fluid duct device 3 needs to be replaced by air coming from at least one fluid source 14. The fluid sources 14 are inlets connecting the freestream zone 2 with the compartment 11. Therefore the new air, which replaces the sucked out air is of the same temperature as the freestream zone 2. This air is usually somewhere in the region of 20°C.

Because of the suction and therefore replacement of the air a flow of fluid (air) is generated from the sources of fluid 14 towards the fluid duct device 3. This flow can take different paths depending inter alia on the relative locations of fluid sources 14 and fluid duct device 3.

The fluid sources 14 are inlets with triangle shaped deflector plates. The deflector plates enhance a swirl effect of the fluid flow in the compartment 11 and/or the target flow for cooling/heating of the compartment 11.

The freestream zone 2 air can also have temperatures somewhere between -56°C and 55°C, depending on the conditions the aircraft and hence the engine are operating at. It is particularly dependent on altitude.

Due to the suction, flammables fluids that might have accumulated inside the compartment 11 are evacuated by the fluid duct device 3 and replaced with fresh air from the freestream zone 2. Also because the freestream zone 2 air is in almost all cases colder than the bypass duct 1 a cooling of the compartment 11 is achieved. Sensible electric components, like the EEC 10, should be effectively cooled and not exposed above their maximum operational temperature limit. This prevents potential overheating that could lead to unit malfunction, and potentially engine shutdown.

This effect is coupled to the operation of the turbofan engine 7 and does not depend on the relative motion of the turbofan engine 7 compared to the surrounding fluid.

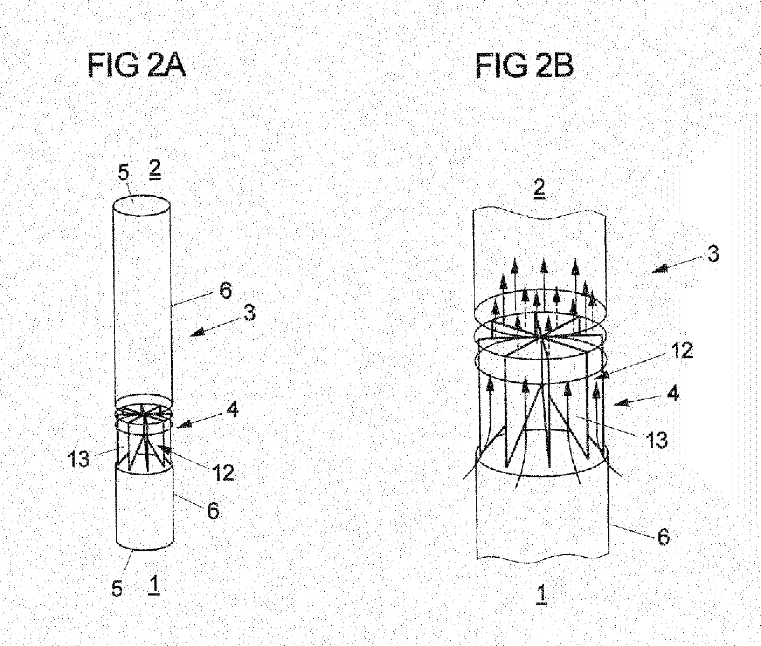

In Fig. 2A is an embodiment of a fluid duct device 3 shown which can be implemented into turbo engines 7 as part of a fluid duct system. It comprises three parts. A first and second fluid duct element 6 with tubular shapes of the same cross-section and a flow guiding device 12, with a star shaped cross-section arranged between the two fluid duct elements 6. All three parts are in fluid communication with each other and/or may be rigidly connected to each other. The two fluid duct elements 6 may be separated into two parts, each connected to one extreme of the flow guiding device 12.

The star-shaped flow guiding device 12 has several surfaces 13 and forms simultaneously at least one opening 4 of the fluid duct device 3. The surfaces 13 of the flow guiding device 12 are contact surfaces 13 for the fluid being sucked into the fluid duct device 3 through the openings 4 formed by the star-shaped flow guiding device 12.

The flow of fluid through the fluid duct device 3 starts in the higher pressure first spatial area 1 which is connected to the fluid duct element 6 at the bottom in this embodiment and flows to the lower pressure second spatial are which is connected to the fluid duct element 6 at the top in this embodiment. The fluid passes the flow guiding device 12 on its way and mixes with the sucked in fluid from the opening 4. Due to the several contact surfaces 13 the suction effect of the fluid duct device 3 can be increased.

Fig. 2B shows a close up of the opening 4 of the fluid duct device 3 as shown in Fig. 2A. In addition to the structural parts of the fluid duct device 3 arrows are shown which symbolize the flow of fluid at the opening 4 of the fluid duct device 3.

The short dashed arrows symbolize the flow of fluid coming from the first spatial area 1. This fluid is most of the time hotter than the fluid in the second spatial area 2 and in the compartment 11.

The curved arrows symbolize the colder fluid being sucked from the compartment 11 into the fluid duct device 3 through the opening 4. Both fluids pass the star-shaped flow guiding device 12 and mix. The long solid arrows symbolize the mixed fluid which has a mixture temperature between the temperature of the fluid in the first spatial area 1 and in the compartment 11.

Due to the several contact surfaces 13 provided by the star-shaped flow guiding device 12 the suction effect of the fluid duct device 3 is increased. But the flow guiding device 12 inside the fluid duct device 3 only increases the suction effect, it is not produced by it.

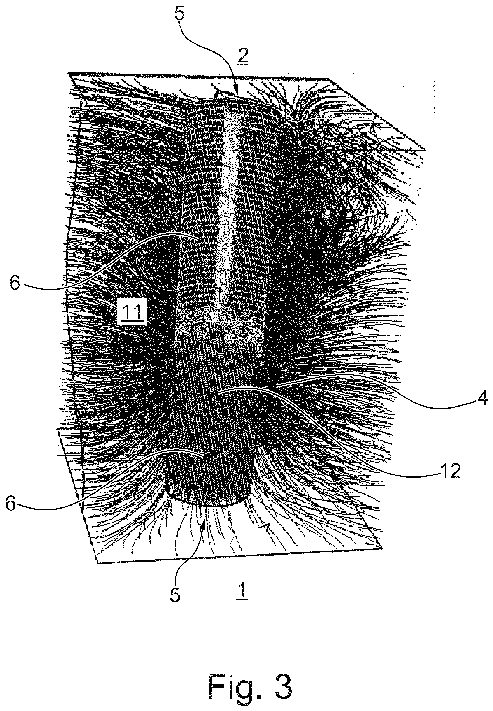

In Fig. 3 is a computational fluid dynamics simulation (CFD simulation) shown of the flow of fluids in the embodiment of the fluid duct device 3 from Fig. 2A and 2B. The fluid duct device 3 comprising its two fluid duct elements 6 and the flow guiding device 12 is shown as well as temperature structured flow path lines.

The finely dotted path lines inside the bottom part of the fluid duct device 3 show a flow of fluid with a temperature of 100°C coming from the first spatial area 1. The solid path lines show a flow of fluid with a temperature of 20°C coming from the compartment 11. The other structured path lines show a mixture of the flow fluids with temperatures between 20°C and 100°C. The dashed lines surrounding a core of light solid path lines in the upper half of the fluid duct device 3 show a colder flow than the flow of the core path lines.

A flow of fluid from the first spatial area 1 towards the second spatial area 2 through the fluid duct device 3 is present. The simulation shows that this flow creates suction at the opening 4 through which fluid surrounding the opening 4 gets sucked into the fluid duct device 3.

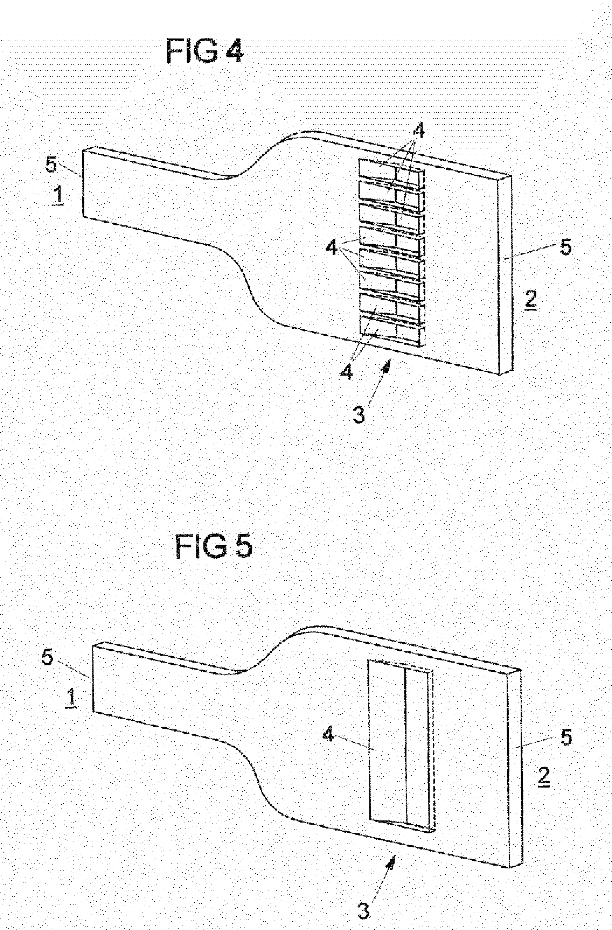

Fig. 4 shows a perspective view of a second embodiment of the fluid duct device 3. The fluid duct device 3 has a smaller cross-section at its first end 5 which gets connected to the first spatial area 1 and a larger cross-section at its second end 5 connecting to the second spatial area 2. It has four openings 4 between the two ends 5 of the fluid duct device 3. The openings 4 are placed on one side wall of the fluid duct device 3.

The openings 4 have each the same rectangular cross-section and comprise a ramp connecting the outer wall of the fluid duct device 3 with the inside of the fluid duct device 3. The ramps start on the side closer to the first spatial area 1, they are there connected to the wall of the fluid duct device 3 and terminate on the side closer to the second spatial area 2 inside the fluid duct device 3. No flow guiding devices 12 are inside the fluid duct device 3.

Fig. 5 shows a perspective view of a third embodiment of the fluid duct device 3. It has a very similar cross-section to the embodiment of Fig. 4. But it comprises only one opening 4 on one wall of the fluid duct device 3. The single opening has a rectangular shape and extends all the way to the bottom part of the fluid duct device 3, so that a piece of one of the narrow side walls is missing. It also comprises a ramp, extending from the outer wall of the fluid duct device 3 to the inside of the fluid duct device 3. The ramp starts on the side closer to the first spatial area 1, it is there connected to the wall of the fluid duct device 3 and terminates on the side closer to the second spatial area 2 inside of the fluid duct device 3.

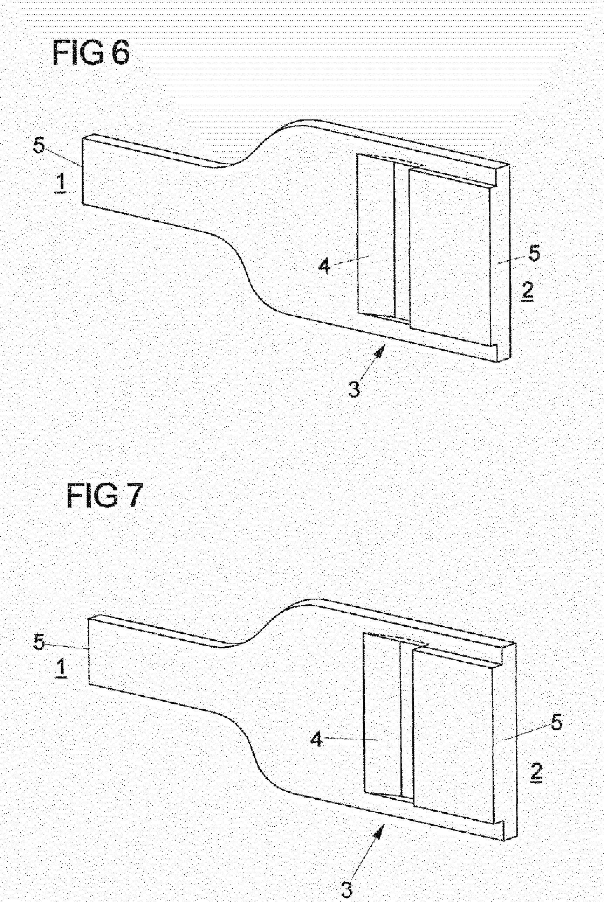

Fig. 6 shows a perspective view of a fourth embodiment of the fluid duct device 3. The design is similar to the embodiment shown in Fig. 5. It differs in the shape of the outer wall between the end of the opening 4 and the end of the fluid duct device 3 closer to the second spatial area 2. A part of the outer wall is lifted by a small amount to enlarge the opening 4, in particular at the side where the ramp ends.

Fig. 7 shows a perspective view of a fifth embodiment of the fluid duct device 3. It is almost identical to the embodiment of Fig. 6 but in this case the lift of a part of the outer wall in flow direction after the opening 4 is larger than in the embodiment of Fig. 6. Therefore is the whole opening 4 larger.

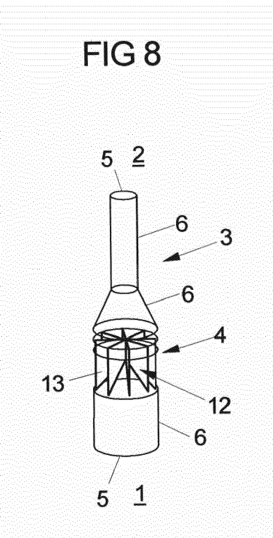

Fig. 8 shows a perspective view of a sixth embodiment of the fluid duct device 3. It comprises four parts, three fluid duct elements 6 and one flow guiding device 12. Two parts are fluid duct elements 6 with different tubular shapes of different cross-sections, one part is a star-shaped flow guiding device 12 with several contact surfaces 13 and the fourth part is a fluid duct element 6 shaped like a cone.

The end 5 connected to the first spatial area 1 belongs to the fluid duct element 6 with a large circular cross-section. It is followed by the star-shaped flow guiding device 12 which outer perimeter is of approximately the same size as the first fluid duct element 6. Following the flow guiding device 12 comes a fluid duct element 6 in the form of a cone. The end connected to the flow guiding device 12 has approximately the same perimeter as the flow guiding device 12 and the second end has a smaller circular cross-section.

The last fluid duct element 6 has the same smaller circular cross-section and terminates in the second spatial area 2. All parts are in fluid communication with each other and/or either rigidly or movable connected to each other.

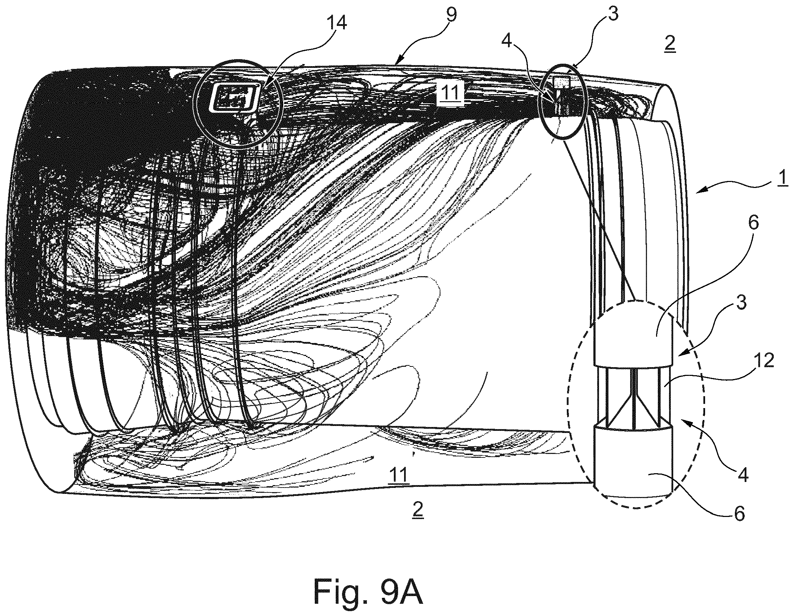

Fig. 9A shows a perspective view of a CFD simulation of a first embodiment of the fluid duct system with an embodiment of the fluid duct device according to Fig. 2A. The simulation shows a basic model of a casing for a turbofan engine 7. It comprises the freestream zone 2 surrounding the whole turbofan engine 7, the cowl 9 enclosing the whole turbofan engine 7, a compartment 11 radial right below the cowl 9, a bypass duct 1 inside of the turbofan engine 7 and a fluid duct device 3 located in the upper right region of the model as well as a fluid source 14, being an inlet in the upper left region of the model. The fluid duct device 3 has one end 5 connected to the bypass duct 1 and a second end 5 connected to the freestream zone 2. It also has an opening 4 which lies in the compartment 11 between the two ends 5. The fluid duct device 3 also comprises a star-shaped flow guiding device 12 which lies inside the fluid duct device at the same location as the opening 4. The inlet 14 connects the freestream zone 2 with the compartment 11.

The fluid duct device 3 is also shown enlarged on the bottom right of the figure and the inlet 14 is marked with a circle.

The simulation shows a flow of fluid from the bypass duct 1 through the fluid duct device 3 towards the freestream zone and the resulting flow of fluid inside the compartment 11 due to the suction created by the fluid duct device 3.

The flow path of the fluid in the compartment 11 is visualized by path lines. They start at the inlet 14 and terminate at the opening 4 of the fluid duct device 3.

The main flow of fluid happens in the upper half of the turbofan engine 7 due to the fact that inlet 14 and opening 4 are both situated in the upper half.

The ventilation effect as well as the thermal management effect of e.g. temperature sensitive electric device is made clear by this simulation.

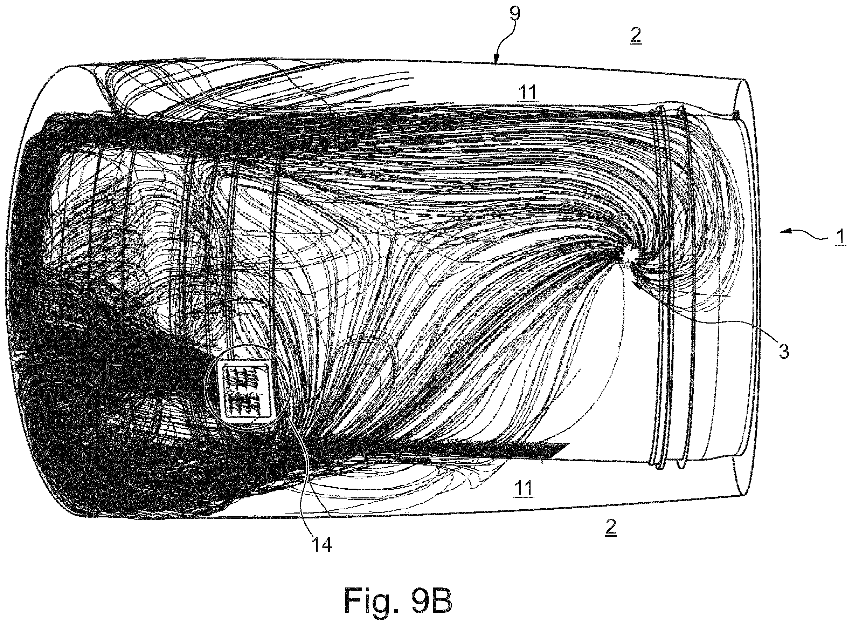

Fig. 9B shows a rotated version of the perspective view of a CFD simulation seen in Fig. 9A. The flow path of the fluid in the compartment 11 is visualized by path lines. They start at the inlet 14 and terminate at the opening 4 of the fluid duct device 3 and can be seen from a different perspective than in Fig. 9A.

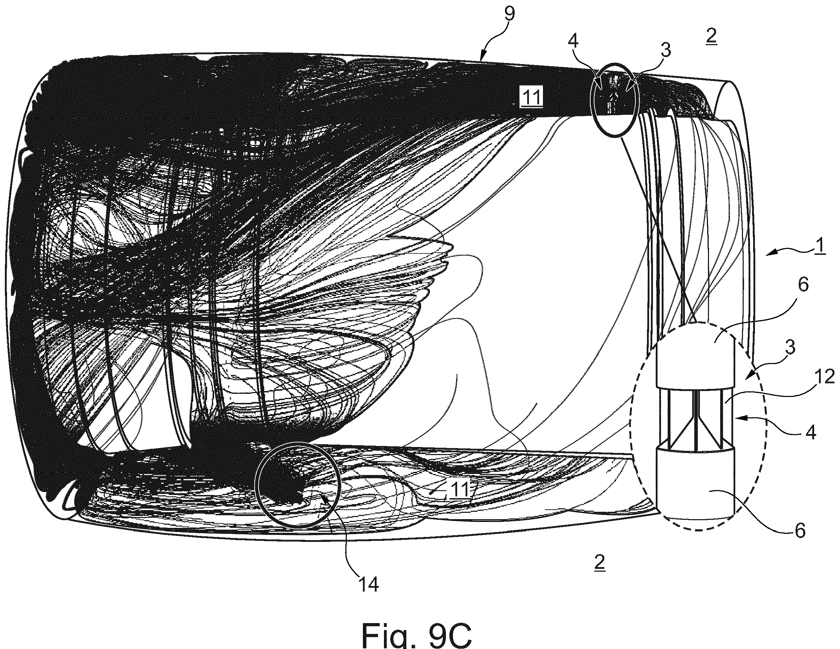

Fig. 9C shows a perspective view of a CFD simulation of a second embodiment of the fluid duct system with an embodiment of the fluid duct device according to Fig. 2A. The fluid duct system is identical to the system shown in Fig. 9A except for the location of the fluid source 14. The fluid source is again an inlet 14 connecting the freestream zone 2 with the compartment 11 but it is located on the bottom left region of the model.

The fluid duct device 3 is here again shown enlarged on the bottom right of the figure and the inlet 14 is marked with a circle.

Therefore the fluid path lines swirl through almost the complete compartment 11 starting on the bottom left at the inlet 14 and terminating at the top right at the opening 4 of the fluid duct device.

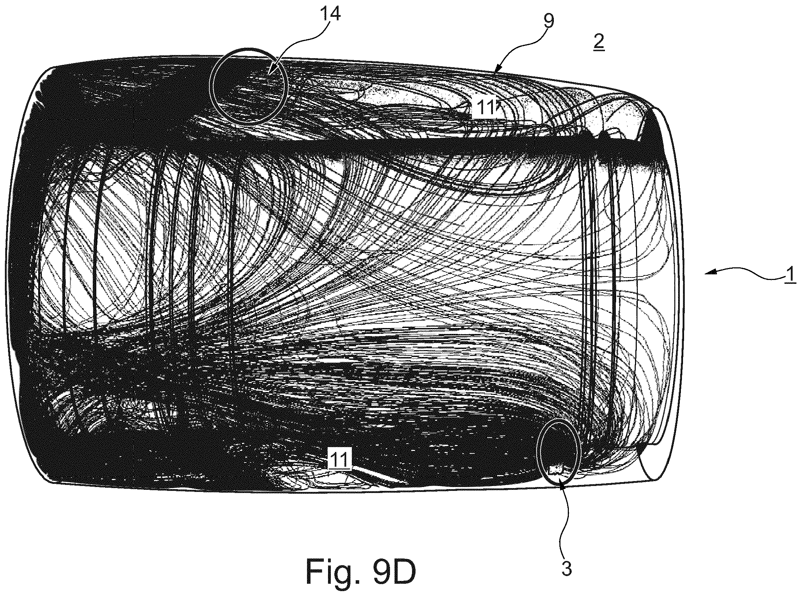

Fig. 9D shows a rotated version of the perspective view of a CFD simulation seen in Fig. 9C. The flow path of the fluid in the compartment 11 is visualized by path lines. They start at the inlet 14 and terminate at the opening 4 of the fluid duct device 3 and can be seen from a different perspective than in Fig. 9C.

It is possible to use differently shaped fluid duct devices 3 on different parts of the turbo engine 7. The shape and location of the at least one fluid duct device 3 - and therefore the fluid duct system - depends on the best location for deriving a thermal management and/or ventilation flow for the compartment 11.

The embodiments shown above relate to aircraft turbo engines 7, in particular turbofan engines 7. Other embodiments - not shown - relate to other turbo engines 7 such as e.g. gas turbines. Fluid duct systems with at least one fluid duct device 3 can also be used for thermal management and/or ventilation of certain regions within those types of engines 7. Here also the pressure gradient inside the at least one fluid duct device 3 can be coupled to the operation of the engine 7. In other embodiments - not shown here - compressors or pumps can be used in connection with the fluid duct device 3 to provide a pressure gradient inside the fluid duct device 3 to achieve thermal management and/or ventilation of certain regions within the turbo engine 7.

It should be understood that the above description is intended for illustrative purposes only, and is not intended to limit the scope of the present disclosure in any way. Thus, those skilled in the art will appreciate that other aspects of the disclosure can be obtained from a study of the drawings, the disclosure and the appended claims. All language of distinction and disparagement with respect to certain features is intended to indicate a lack of preference for those features, but not to exclude such from the scope of the disclosure entirely unless otherwise indicated. Any ranges given herein include any and all specific values within the range and any and all ranges within the given range. The scope of protection is defined by the claims.

### Reference list

- 1: first spatial area, e.g. bypass duct of a turbofan engine
- 2: second spatial area, e.g. freestream zone
- 3: fluid duct device
- 4: opening in the fluid duct device
- 5: end of the fluid duct device
- 6: fluid duct element
- 7: turbo engine
- 8: core of a turbo engine
- 9: cowl of an aircraft engine
- 10: Electronic Engine Controller (EEC)
- 11: compartment inside the turbo engine
- 12: flow guiding device
- 13: contact surface
- 14: fluid source, e.g. inlet

## Claims

1. A turbofan engine comprising a compartment (11) containing at least one temperature sensitive target within the turbofan engine (7) and comprising a fluid duct system for thermal management and/or ventilation in the compartment (11), said fluid duct system comprising a fluid duct device (3), said turbofan engine (7) comprising a first spatial area (1) at least partially lying in a bypass duct of the turbofan engine (7) through which a fluid flows during operation of the turbofan engine (7),
**characterized in that**
the fluid duct device (3) of the fluid duct system has at least two ends (5) and at least one opening (4) arranged within the compartment (11) between the at least two ends (5), and the fluid duct device (3) connects the first spatial area (1) of the bypass duct at the first end (5) of the fluid duct device with a second spatial area (2) at the second end (5) of the fluid duct device, the second spatial area (2) lying in a freestream zone (2) of the turbofan engine (7) and having a lower pressure than the first spatial area (1) during operation of the turbo engine (7), so that a pressure gradient is present in the fluid duct device (3) and a flow of fluid from the first spatial area (1) towards the second spatial area (2) is generated resulting in a pressure gradient in the compartment (11) and in a suction in order to suck a fluid surrounding the at least one opening (4) into the fluid duct device (3) through the at least one opening (4) thereby generating a flow of fluid in the compartment (11) for thermal management and/or ventilation of the compartment (11).

2. The turbofan engine according to claim 1, wherein the fluid duct device (3) comprises at least one fluid duct element (6) with a ellipsoidal, polygonal or rectangular cross-section.

3. The turbofan engine according to at least one of the preceding claims, wherein the fluid duct system comprises at least one flow guiding device (12) at least partially inside of the fluid duct device (3).

4. The turbofan engine according to one of the preceding claims, wherein the compartment (11) is arranged radial between the freestream zone (2) and the bypass duct (1) seen from the axis of the turbofan engine (7).

5. The turbofan engine according to at least one of the preceding claims, wherein the fluid duct device (3) is configured to provide a flow of fluid through at least one inlet (14), connecting a freestream zone (2) of the turbo engine (7) with the compartment (11).

6. The turbofan engine according to at least one of the preceding claims, wherein the suction at the at least one opening (4) created by the fluid duct device (3) is due to a drop in static pressure according to Bernoulli's principle.

7. The turbofan engine according to at least one of the preceding claims, wherein the opening (4) is formed by a through hole in an outer wall of the fluid duct device (3).

8. The turbofan engine according to at least one of the preceding claims, wherein the fluid duct system comprises at least one flow guiding device (12) at least partially inside of the fluid duct device (3) which provides at least one contact surface (13) lying at least partially opposite of the at least one opening (4) for the fluid sucked into the fluid duct device (3) through the at least one opening (4).

9. The turbofan engine according to at least one of the preceding claims, wherein the fluid duct device (3) comprises at least one flow guiding device (12) and at least one fluid duct element (6) being in fluid communication with each other, said flow guiding device (12) comprising the at least one opening (4) and providing at least one contact surface (13) for the fluid sucked into the fluid duct device (3) through the at least one opening (4).

10. The turbofan engine according to at least one of claims 3, 8 or 9 wherein the at least one flow guiding device (12) has a star-shaped cross-section.

11. The turbofan engine according to at least one of the preceding claims, wherein the fluid duct device (3) comprises several, separately manufacturable elements being in fluid communication with each other.

## Patentansprüche

1. Mantelstromtriebwerk, umfassend einen Raum (11), der wenigstens ein temperaturempfindliches Ziel in dem Mantelstromtriebwerk (7) enthält und ein Fluidkanalsystem zum Wärmemanagement und/oder zur Belüftung in dem Raum (11) umfasst, wobei das Fluidkanalsystem eine Fluidkanalvorrichtung (3) umfasst, wobei das Mantelstromtriebwerk (7) einen ersten räumlichen Bereich (1) umfasst, der wenigstens zum Teil in einem Bypasskanal des Mantelstromtriebwerks (7) liegt, durch den im Betrieb des Mantelstromtriebwerks (7) ein Fluid strömt,
**dadurch gekennzeichnet, dass** die Fluidkanalvorrichtung (3) des Fluidkanalsystems wenigstens zwei Enden (5) und wenigstens eine Öffnung (4) aufweist, die in dem Raum (11) zwischen den wenigstens zwei Enden (5) angeordnet ist, und die Fluidkanalvorrichtung (3) den ersten räumlichen Bereich (1) des Bypasskanals an dem ersten Ende (5) der Fluidkanalvorrichtung mit einem zweiten räumlichen Bereich (2) an dem zweiten Ende (5) der Fluidkanalvorrichtung verbindet, wobei der zweite räumliche Bereich (2) in einer Freistromzone (2) des Mantelstromtriebwerks (7) liegt und im Betrieb des Mantelstromtriebwerks (7) einen niedrigeren Druck als der erste räumliche Bereich (1) aufweist, so dass ein Druckgefälle in der Fluidkanalvorrichtung (3) vorliegt und ein Fluidstrom von dem ersten räumlichen Bereich (1) zu dem zweiten räumlichen Bereich (2) erzeugt wird, der zu einem Druckgefälle in dem Raum (11) und einer Saugwirkung führt, um ein die wenigstens eine Öffnung (4) umgebendes Fluid durch die wenigstens eine Öffnung (4) in die Fluidkanalvorrichtung (3) zu saugen, wodurch ein Fluidstrom in dem Raum (11) zum Wärmemanagement und/oder zur Belüftung des Raums (11) erzeugt wird.

2. Mantelstromtriebwerk nach Anspruch 1, wobei die Fluidkanalvorrichtung (3) wenigstens ein Fluidkanalelement (6) mit einem ellipsenförmigen, polygonalen oder rechteckigen Querschnitt umfasst.

3. Mantelstromtriebwerk nach wenigstens einem der vorhergehenden Ansprüche, wobei das Fluidkanalsystem wenigstens eine Strömungsleitvorrichtung (12) wenigstens zum Teil in der Fluidkanalvorrichtung (3) umfasst.

4. Mantelstromtriebwerk nach einem der vorhergehenden Ansprüche, wobei der Raum (11), von der Achse des Mantelstromtriebwerks (7) aus gesehen, radial zwischen der Freistromzone (2) und dem Bypasskanal (1) angeordnet ist.

5. Mantelstromtriebwerk nach wenigstens einem der vorhergehenden Ansprüche, wobei die Fluidkanalvorrichtung (3) dazu ausgelegt ist, einen Fluidstrom durch wenigstens einen Einlass (14) bereitzustellen, der eine Freistromzone (2) des Mantelstromtriebwerks (7) mit dem Raum (11) verbindet.

6. Mantelstromtriebwerk nach wenigstens einem der vorhergehenden Ansprüche, wobei die Saugwirkung an der wenigstens einen Öffnung (4), die durch die Fluidkanalvorrichtung (3) erzeugt wird, durch einen Abfall des statischen Drucks nach dem Bernoulli-Prinzip bedingt ist.

7. Mantelstromtriebwerk nach wenigstens einem der vorhergehenden Ansprüche, wobei die Öffnung (4) durch eine Durchgangsbohrung in einer Außenwand der Fluidkanalvorrichtung (3) gebildet ist.

8. Mantelstromtriebwerk nach wenigstens einem der vorhergehenden Ansprüche, wobei das Fluidkanalsystem wenigstens eine Strömungsleitvorrichtung (12) wenigstens zum Teil in der Fluidkanalvorrichtung (3) umfasst, die wenigstens eine Kontaktfläche (13) bereitstellt, die wenigstens zum Teil gegenüber der wenigstens einen Öffnung (4) für das Fluid liegt, das durch die wenigstens eine Öffnung (4) in die Fluidkanalvorrichtung (3) gesaugt wird.

9. Mantelstromtriebwerk nach wenigstens einem der vorhergehenden Ansprüche, wobei die Fluidkanalvorrichtung (3) wenigstens eine Strömungsleitvorrichtung (12) und wenigstens ein Fluidkanalelement (6), die sich in fluidischer Verbindung miteinander befinden, umfasst, wobei die Strömungsleitvorrichtung (12) die wenigstens eine Öffnung (4) umfasst und wenigstens eine Kontaktfläche (13) für das Fluid bereitstellt, das durch die wenigstens eine Öffnung (4) in die Fluidkanalvorrichtung (3) gesaugt wird.

10. Mantelstromtriebwerk nach wenigstens einem der Ansprüche 3, 8 oder 9, wobei die wenigstens eine Strömungsleitvorrichtung (12) einen sternförmigen Querschnitt aufweist.

11. Mantelstromtriebwerk nach wenigstens einem der vorhergehenden Ansprüche, wobei die Fluidkanalvorrichtung (3) mehrere, getrennt herstellbare Elemente umfasst, die sich in fluidischer Verbindung miteinander befinden.

## Revendications

1. Turboréacteur à double flux comprenant un compartiment (11) contenant au moins une cible sensible à la température à l'intérieur du turboréacteur à double flux (7) et comprenant un système de conduit de fluide pour la gestion thermique et/ou la ventilation dans le compartiment (11), ledit système de conduit de fluide comprenant un dispositif (3) de conduit de fluide, ledit turboréacteur à double flux (7) comprenant une première région spatiale (1) au moins partiellement située dans un conduit de dérivation du turboréacteur à double flux (7) à travers lequel un fluide s'écoule pendant le fonctionnement du turboréacteur à double flux (7),
**caractérisé en ce que**
le dispositif (3) de conduit de fluide du système de conduit de fluide comporte au moins deux extrémités (5) et au moins une ouverture (4) agencée à l'intérieur du compartiment (11) entre lesdites au moins deux extrémités (5), et le dispositif (3) de conduit de fluide relie la première région spatiale (1) du conduit de dérivation à la première extrémité (5) du dispositif de conduit de fluide à une deuxième région spatiale (2) à la deuxième extrémité (5) du dispositif de conduit de fluide, la deuxième région spatiale (2) se situant dans une zone d'écoulement libre (2) du turboréacteur à double flux (7) et ayant une pression plus faible que la première région spatiale (1) pendant le fonctionnement du turboréacteur à double flux (7), de telle sorte qu'un gradient de pression est présent dans le dispositif (3) de conduit de fluide et un écoulement de fluide à partir de la première région spatiale (1) vers la deuxième région spatiale (2) est généré, résultant en un gradient de pression dans le compartiment (11) et en une aspiration afin d'aspirer un fluide entourant l'au moins une ouverture (4) à l'intérieur du dispositif (3) de conduit de fluide à travers l'au moins une ouverture (4), en générant ainsi un écoulement de fluide dans le compartiment (11) pour la gestion thermique et/ou la ventilation du compartiment (11).

2. Turboréacteur à double flux selon la revendication 1, dans lequel le dispositif (3) de conduit de fluide comprend au moins un élément (6) de conduit de fluide présentant une section transversale ellipsoïdale, polygonale ou rectangulaire.

3. Turboréacteur à double flux selon au moins l'une des revendications précédentes, dans lequel le système de conduit de fluide comprend au moins un dispositif (12) de guidage d'écoulement au moins partiellement à l'intérieur du dispositif (3) de conduit de fluide.

4. Turboréacteur à double flux selon l'une des revendications précédentes, dans lequel le compartiment (11) est agencé radialement entre la zone d'écoulement libre (2) et le conduit de dérivation (1), vu depuis l'axe du turboréacteur à double flux (7).

5. Turboréacteur à double flux selon au moins l'une des revendications précédentes, dans lequel le dispositif (3) de conduit de fluide est configuré pour produire un écoulement de fluide à travers au moins une entrée (14), reliant une zone d'écoulement libre (2) du turbocompresseur à double flux (7) au compartiment (11).

6. Turboréacteur à double flux selon au moins l'une des revendications précédentes, dans lequel l'aspiration au niveau de l'au moins une ouverture (4) créée par le dispositif (3) de conduit de fluide est due à une chute de pression statique conformément au principe de Bernoulli.

7. Turboréacteur à double flux selon au moins l'une des revendications précédentes, dans lequel l'ouverture (4) est formée par un trou traversant dans une paroi extérieure du dispositif (3) de conduit de fluide.

8. Turboréacteur à double flux selon au moins l'une des revendications précédentes, dans lequel le système de conduit de fluide comprend au moins un dispositif (12) de guidage d'écoulement au moins partiellement à l'intérieur du dispositif (3) de conduit de fluide, qui fournit au moins une surface de contact (13) située au moins partiellement en regard de l'au moins une ouverture (4) pour le fluide aspiré à l'intérieur du dispositif (3) de conduit de fluide à travers l'au moins une ouverture (4) .

9. Turboréacteur à double flux selon au moins l'une des revendications précédentes, dans lequel le dispositif (3) de conduit de fluide comprend au moins un dispositif (12) de guidage d'écoulement et au moins un élément (6) de conduit de fluide en communication fluidique l'un avec l'autre, ledit dispositif (12) de guidage d'écoulement comprenant l'au moins une ouverture (4) et fournissant au moins une surface de contact (13) pour le fluide aspiré à l'intérieur du dispositif (3) de conduit de fluide à travers l'au moins une ouverture (4).

10. Turboréacteur à double flux selon au moins l'une des revendications 3, 8 ou 9, dans lequel l'au moins un dispositif (12) de guidage d'écoulement présente une section transversale en forme d'étoile.

11. Turboréacteur à double flux selon au moins l'une des revendications précédentes, dans lequel le dispositif (3) de conduit de fluide comprend plusieurs éléments, pouvant être fabriqué séparément, en communication fluidique les uns avec les autres.
